# EUROPÄISCHE PATENTSCHRIFT

(11) **EP 4 547 503 B1**
(45) Veröffentlichungstag und Bekanntmachung des Hinweises auf die Patenterteilung: **22.04.2026**
(21) Anmeldenummer: 23742432.0
(22) Anmeldetag: 29.06.2023
(51) Int. Cl.: B60D 1/64

(54) **STECKERVORRICHTUNG FÜR EIN STECKKUPPLUNGSSYSTEM ZWISCHEN EINEM ERSTEN FAHRZEUG UND EINEM ZWEITEN FAHRZEUG**
PLUG DEVICE FOR A PLUG-TYPE COUPLING SYSTEM BETWEEN A FIRST VEHICLE AND A SECOND VEHICLE
DISPOSITIF D'ENFICHAGE POUR UN SYSTÈME DE COUPLAGE DE TYPE ENFICHABLE ENTRE UN PREMIER VÉHICULE ET UN SECOND VÉHICULE

(30) Priorität: 01.07.2022 DE 102022002391
(43) Veröffentlichungstag der Anmeldung: 07.05.2025
(73) Patentinhaber: JOST-Werke Deutschland GmbH, 63263 Neu-Isenburg (DE)
(72) Erfinder: ALGÜERA, José Manuel, 63739 Aschaffenburg (DE); SAUPE, Swen, 55126 Mainz (DE); GITZEN, Stephan, 64560 Riedstadt (DE)
(74) Vertreter: Straubel, Dirk
(86) Internationale Anmeldenummer: PCT/IB2023/056786
(87) Internationale Veröffentlichungsnummer: WO 2024/003836

(56) Entgegenhaltungen:
- CH-A2- 719 053
- CN-A- 111 328 436
- SE-C2- 527 675
- US-A- 4 284 311

## Beschreibung

Die Erfindung betrifft eine Steckervorrichtung für ein Steckkupplungssystem gemäß der im Oberbegriff von Anspruch 1 stehenden Merkmale. Steckkupplungssysteme werden neuerdings zwischen einem Zugfahrzeug, wie zum Beispiel einer Sattelzugmaschine, und einem Anhängerfahrzeug, wie zum Beispiel einem Sattelauflieger, eingebaut, um darüber eine weitgehende oder vollständige automatisierte Verbindung der Versorgungsleitungen bereits während des mechanischen Ankupplungsprozesses von Zugfahrzeug und Anhängerfahrzeug herzustellen. Die US 4 284 311 A offenbart ein bekanntes Steckkupplungssystem.

Die DE 10 2004 024 333 B4 beschreibt ein typisches Steckkupplungssystem, bei welchem während einer rückwärtigen Annäherung des Zugfahrzeugs an das Anhängerfahrzeugs eine auf dem Zugfahrzeug angeordnete erste Steckerhälfte eine an dem Anhängerfahrzeug schwenkbar um einen Königszapfen gelagerte zweite Steckerhälfte fängt und beide Steckerhälften durch eine weitere Annäherung des Zugfahrzeugs an das Anhängerfahrzeug kontaktierend ineinandergeschoben werden.

Eine inzwischen verbreitete Steckvorrichtung zeigt die DE 10 2018 117 584 A1, die sich jedoch im Hinblick auf die Geometrie und die Anzahl sowie die Belegung der Kontaktelemente in der ersten und zweiten Steckerhälfte aufgrund zunehmender Anforderungen an den Energie- und Datentransfer zwischen dem Zugfahrzeug und dem Anhängerfahrzeug als nicht mehr ausreichend herausgestellt hat. Insbesondere ist es für zukünftige Anwendungen notwendig, dass die aus ersten und zweiten Steckerhälften gebildeten Steckervorrichtungen geeignet sind, Signale mit noch höherer Übertragungsrate und Übertragungsgüte von dem Zugfahrzeug auf das Anhängerfahrzeug weitergeben zu können.

Hierdurch entstehen jedoch Kompatibilitätsprobleme zwischen den unterschiedlichen Generationen von Steckervorrichtungen. Da nicht alle Zugfahrzeuge und Anhängerfahrzeuge gleichzeitig mit Steckervorrichtungen der neuesten Genration ausgestattet sein werden, muss sichergestellt sein, dass es bei der Ausgestaltung und Positionierung zukünftiger Steckerhälften zu keinen Schäden oder Fehlfunktionen mechanischer oder elektrischer Art kommen kann, beispielsweise wenn eine erste Steckerhälfte der neuesten Generation auf eine zweite Steckerhälfte einer älteren Generation trifft oder umgekehrt.

Folglich lag der Erfindung die Aufgabe zugrunde, eine Steckervorrichtung derart weiterzuentwickeln, dass mit dieser eine Verbindung zwischen erster und zweiter Steckerhälfte gleicher oder unterschiedlicher Generationen ohne Schäden oder Fehlfunktionen möglich ist.

Die Aufgabe wird erfindungsgemäß mit den Merkmalen des Anspruchs 1 gelöst. Die älteren, auf dem Markt befindlichen Steckervorrichtungen mit ersten und zweiten Steckerhälften derselben Generation sind hinsichtlich ihrer funktionalen und geometrischen Beschaffenheit kompatibel zueinander. Gleiches gilt für die neuste Generation von ersten und zweiten Steckerhälften, die ebenfalls kompatibel zueinander sind. Probleme können jedoch auftreten, wenn beispielsweise ein erstes Fahrzeug mit einer ersten Steckerhälfte der neuesten Generation und ein daran anzukuppelndes, zweites Fahrzeug mit einer zweiten Steckerhälfte einer älteren Generation bestückt ist. In diesem Fall wäre es hinnehmbar, wenn sich der Funktionsumfang auf die Funktionalität der zweiten Steckerhälfte beschränkt. Es muss jedoch vermieden werden, dass bei einem gemischten Betrieb derartiger erster und zweiter Steckerhälften aus unterschiedlichen Generationen aufgrund einer geometrischen Inkompatibilität mechanische Beschädigungen an einer oder beiden der ersten und zweiten Steckerhälften auftreten.

Eine Zerstörung während des Kuppelns einer geometrisch inkompatiblen, ersten und zweiten Steckerhälfte wird dadurch vermieden, dass mindestens ein Kontaktelement in einem bezüglich des zugehörigen, ersten oder zweiten Gehäuses in der Steckachse beweglich gelagerten Steckersegment angebracht ist. Im Falle einer Kollision der ersten oder zweiten Steckerhälfte mit Bauteilen einer anderen, geometrisch inkompatiblen zweiten oder ersten Steckerhälfte ist das Steckersegment in der Steckachse, entgegen der Steckrichtung ausweichbar angeordnet und gibt einen Bauraum frei, in welchen ein Abschnitt der anderen, inkompatiblen zweiten oder ersten Steckerhälfte eintauchbar ist. Das Steckersegment ist derart beschaffen, dass bei einer Kontaktierung der ersten oder zweiten Steckerhälfte mit einer geometrisch inkompatiblen, zweiten oder ersten Steckerhälfte das Steckersegment reversibel in einer zurückgeschobenen Ausweichposition ohne eine Verbindung von Kontaktelementen ausgerichtet ist. Das Steckersegment weicht ausschließlich bei einer Kontaktierung mit einer geometrisch inkompatiblen, ersten oder zweiten Steckerhälfte aus. Bei einer Kontaktierung der ersten oder zweiten Steckerhälfte mit einer geometrisch kompatiblen, zweiten oder ersten Steckerhälfte ist eine vorgesehene, leitende oder übertragende Verbindung der beteiligten Kontaktelemente in einer Ausgangslage des Steckersegments hergestellt.

Unter einem Kontaktelement wird eine lösbare Übertragungsstelle für elektrische und/oder pneumatische und/oder hydraulische Energie verstanden, die typischerweise als klassische Stecker/Steckerbuchse ausgebildet ist. Diese wiederum kann radial oder in Steckrichtung stirnseitig angeordnete Kontaktplatten oder sich in einem verbundenen Zustand aneinanderlege Kontaktzungen aufweisen. Die Stecker/Steckerbuchse ist insbesondere auch ein Koaxialstecker, der mit einer Koaxialsteckerbuchse zusammenwirkt.

Vorzugsweise ist das Steckersegment bezüglich des zugehörigen ersten oder zweiten Gehäuses linear geführt. Eine derartige lineare Führung kann erreicht werden, indem das Steckersegment in eine komplementär ausgeformte Ausnehmung des ersten oder zweiten Gehäuses eingesetzt ist.

Gemäß einer ersten vorteilhaften Ausgestaltung ist das Steckersegment ein Abschnitt des ersten oder zweiten Gehäuses. Dieser Abschnitt des ersten oder zweiten Gehäuses ist beweglich gegenüber dem restlichen, relativ ortsfesten Teil des Gehäuses gelagert. Diese Ausführungsform bietet den Vorteil, dass mehrere Kontaktelemente in dem Abschnitt des ersten oder zweiten Gehäuses untergebracht sein können und synchron miteinander verfahrbar sind.

Der Abschnitt des ersten oder zweiten Gehäuses kann insbesondere aus einem Teil der dem anderen zweiten oder ersten Gehäuse zugewandten Vorderwand gebildet sein. Die Vorderwand trägt regelmäßig die Kontaktelemente des ersten oder zweiten Gehäuses. Bei einem Ausweichen des jeweiligen Steckersegmentes in der Steckachse wandert auch der Teil der Vorderwand in das Innere der ursprünglich von dem ersten oder zweiten Gehäuse aufgespannten Kontur.

Zweckmäßigerweise ist das Kontaktelement ortsfest zu dem Abschnitt des zugehörigen ersten oder zweiten Gehäuses angeordnet. Dieses kann insbesondere dadurch erreicht werden, dass das jeweilige Kontaktelement an dem Abschnitt des ersten oder zweiten Gehäuses befestigt ist. Sinnvollerweise ist an dem Abschnitt des zugehörigen ersten Gehäuses eine der mehreren Steckerbuchsen befestigt.

Gemäß einer zweiten vorteilhaften Ausgestaltung ist das Steckersegment aus einer der mehreren Steckerbuchsen gebildet. Bei dieser Ausführungsform ist lediglich mindestens eine der Steckerbuchsen in der Steckachse beweglich gegenüber dem ersten Gehäuse gelagert. Die Wandabschnitte des ersten Gehäuses sind hingegen ortsfest zueinander angeordnet. Die Reduzierung der beweglichen Lagerung auf die Steckerbuchse ermöglicht eine besonders kompakte Bauweise, da kein freier Bauraum für das Verfahren von Teilen des ersten oder zweiten Gehäuses berücksichtigt zu werden braucht.

Vorzugsweise ist die eine Steckerbuchse des Steckersegments derart angeordnet, dass sie dem in Steckachse am weitesten vorstehenden Kontaktstift gegenübersteht. In diesem Bereich würde zuerst eine Kollision der ersten und zweiten Steckerhälfte auftreten.

Günstigerweise ist an dem Abschnitt des zugehörigen zweiten Gehäuses einer der mehreren Kontaktstifte befestigt. Bei dieser Ausführungsform ist/sind alternativ zu der Steckerbuchse einer oder mehrere der Kontaktstifte in der Steckachse beweglich gelagert und kann/können bei einer Inkompatibilität der ersten und zweiten Steckerhälfte als Abschnitt des zweiten Gehäuses aus dem Kollisionsbereich herauswandern.

Gemäß einer dritten vorteilhaften Ausgestaltung ist das Steckersegment aus einem der mehreren Kontaktstifte gebildet. Auch diese Ausführungsform reduziert den beweglich gelagerten Teil des Steckersegmentes auf die kleinste Baueinheit, nämlich den Kontaktstift. Aufgrund des Verzichts auf eine bewegliche Lagerung eines Abschnitts des zweiten Gehäuses lassen sich besonders kompakte Bauraummaße erzielen.

Vorteilhafterweise ist der eine Kontaktstift des Steckersegments in der Steckachse derart dimensioniert, dass dieser gegenüber der zweiten Steckerhälfte am weitesten vorsteht. Hierdurch findet eine erste Kontaktierung an dem am weitesten vorstehenden Kontaktstift statt, der sodann zunächst für eine radiale Führung der ersten und zweiten Steckerhälfte sorgt und aufgrund seiner beweglichen Lagerung in axialer Richtung gegen Beschädigung geschützt ist.

Es hat sich als besonders sinnvoll herausgestellt, wenn das Steckersegment mittels eines Federelementes oder Aktuators in einer vorgeschobenen Ausgangsstellung gehalten ist. Hierdurch nimmt das Steckersegment ohne Anwesenheit einer anderen ersten oder zweiten Steckerhälfte stets eine definierte, vorgeschobene Ausgangsstellung ein.

Es kann besonders sinnvoll sein, wenn das Federelement oder der Aktuator eine derartige Vorspannkraft auf das Steckersegment überträgt, die größer ist als ein Steckwiderstand eines kompatiblen Kontaktelementes der anderen ersten oder zweiten Steckerhälfte. Unter dem Steckwiderstand wird die in axiale Richtung auftretende Kraft zum Verbinden zueinander kompatibler erster und zweiter Steckerhälften verstanden. Eine derartige Verbindung ist durch ein entsprechend steif ausgelegtes Federelement oder Aktuator sichergestellt, ohne dass es zu einem unbeabsichtigten Zurückweichen des Steckersegments kommt. Auch im Fahrbetrieb sollten das Steckersegment und Kontaktelement der anderen ersten oder zweiten Steckerhälfte mit einer stetigen Vorspannkraft gegeneinandergedrückt sein, damit es durch Schwingungen im Fahrbetrieb nicht zu einer Unterbrechung des Kontaktes von Steckersegment und Kontaktelement kommt.

Vorzugsweise ist das Steckersegment in der ersten Steckerhälfte angeordnet und bei Kontakt mit einer inkompatiblen, zweiten Steckerhälfte durch diese in eine zurückgeschobene Ausweichposition gedrückt. Alternativ kann auch vorgesehen sein, dass das Steckersegment in der zweiten Steckerhälfte angeordnet und bei Kontakt mit einer inkompatiblen, ersten Steckerhälfte durch diese in eine zurückgeschobene Ausweichposition gedrückt ist.

Gemäß einer besonderen Ausgestaltung kann das Steckersegment der ersten Steckerhälfte einen Verfahrweg zwischen einer vorgeschobenen Ausgangsstellung und einer zurückgeschobenen Ausweichposition aufweisen, der mindestens einer Differenz aus einer Länge des zugehörigen, aus dem zweiten Gehäuse vorstehenden Kontaktstiftes der zweiten Steckerhälfte und einer Länge der zugehörigen, in das erste Gehäuse hineinragenden Steckerbuchse des Steckersegments der ersten Steckerhälfte in ihrer vorgeschobenen Ausgangsstellung entspricht. Hieraus resultiert der Vorteil, dass der Verfahrweg ausreichend groß ist, um eine zerstörende Kollision des Kontaktstifts in der Steckerbuchse zu vermeiden.

Alternativ hierzu kann auch das Steckersegment der zweiten Steckerhälfte einen Verfahrweg zwischen einer vorgeschobenen Ausgangsstellung und einer zurückgeschobenen Ausweichposition aufweisen, der mindestens einer Differenz aus Länge der zugehörigen, in das erste Gehäuse hineinragenden Steckerbuchse der ersten Steckerhälfte und einer Länge des zugehörigen, aus dem zweiten Gehäuse vorstehenden Kontaktstiftes des Steckersegments der zweiten Steckerhälfte in seiner vorgeschobenen Ausgangsstellung entspricht. Auch hierdurch wird sichergestellt, dass stets ein ausreichend dimensionierter Verfahrweg zur Verfügung steht und eine zerstörende Kollision des Kontaktstiftes mit der Steckerbuchse ausgeschlossen ist.

Bevorzugt weisen die die Steckerbuchse oder der Kontaktstift des Steckersegmentes Übertragungsmittel auf, die in und quer zur Steckachse außerhalb einer Stoßzone mit den Kontaktelementen des anderen, zweiten oder ersten Gehäuses angeordnet sind. Unter einer Stoßzone wird der Bereich des initialen Aufeinandertreffens von Steckerbuchse und Kontaktstift verstanden. Das jeweilige Übertragungsmittel ist grundsätzlich immer an beiden Kontaktelementen der ersten und zweiten Steckerhälfte vorhanden und derart räumlich angeordnet, dass eine Kontaktierung zwischen dem Kontaktstift und der Steckerbuchse stattfinden kann.

Zum besseren Verständnis wird die Erfindung nachfolgend anhand von 13 Figuren näher erläutert. Es zeigen die
- **FIG. 1:**: eine perspektivische Ansicht auf eine erste Steckerhälfte mit einem Steckersegment gemäß einer ersten Ausführungsform;
- **FIG. 2:**: eine perspektivische Ansicht auf eine zweite Steckerhälfte mit einem Steckersegment gemäß einer ersten Ausführungsform;
- **FIG. 3:**: eine perspektivische Ansicht auf eine erste Steckerhälfte mit einem Steckersegment gemäß einer zweiten Ausführungsform;
- **FIG. 4:**: eine perspektivische Ansicht auf eine zweite Steckerhälfte mit einem Steckersegment gemäß einer zweiten Ausführungsform;
- **FIG. 5:**: einen schematischen Querschnitt einer Steckervorrichtung vor Kontaktierung mit erster Steckerhälfte neuester Generation und zweiter Steckerhälfte neuester Generation aufweisend ein Steckerelement;
- **FIG. 6:**: einen schematischen Querschnitt einer verbundenen Steckervorrichtung mit erster und zweiter Steckerhälfte älterer Generation;
- **FIG. 7:**: einen schematischen Querschnitt einer Steckervorrichtung vor Kontaktierung mit erster Steckerhälfte neuester Generation ohne Steckersegment und zweiter Steckerhälfte älterer Generation;
- **FIG. 8:**: einen schematischen Querschnitt gemäß FIG. 7 mit schädigender Kollision der Steckervorrichtung während weiterer Annäherung;
- **FIG. 9:**: einen schematischen Querschnitt einer Steckervorrichtung nach Kontaktierung mit erster Steckerhälfte neuester Generation aufweisend ein Steckersegment gemäß erster Ausführungsform und zweiter Steckerhälfte älterer Generation;
- **FIG. 10:**: einen schematischen Querschnitt einer Steckervorrichtung nach Kontaktierung mit erster Steckerhälfte neuester Generation aufweisend ein Steckersegment gemäß zweiter Ausführungsform und zweiter Steckerhälfte älterer Generation;
- **FIG. 11:**: einen schematischen Querschnitt einer Steckervorrichtung vor Kontaktierung mit erster Steckerhälfte älterer Generation und zweiter Steckerhälfte neuester Generation aufweisend ein Steckersegment gemäß erster Ausführungsform;
- **FIG. 12:**: einen schematischen Querschnitt einer Steckervorrichtung gemäß FIG. 11 nach Kontaktierung;
- **FIG. 13:**: einen schematischen Querschnitt einer Steckervorrichtung nach Kontaktierung mit erster Steckerhälfte älterer Generation und zweiter Steckerhälfte neuester Generation aufweisend ein Steckersegment gemäß zweiter Ausführungsform;

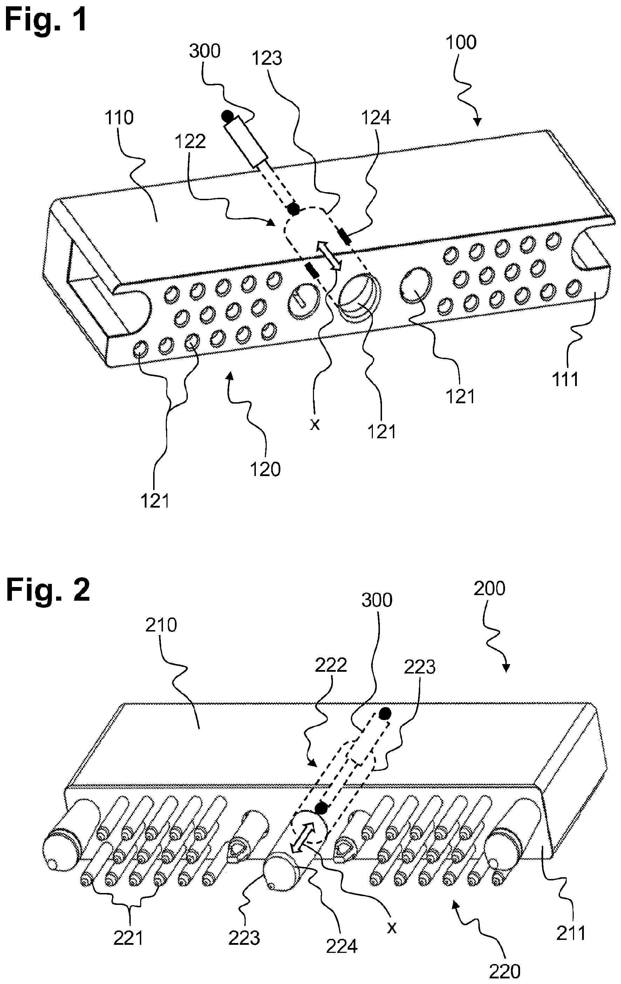

Die FIG. 1 zeigt eine perspektivische Perspektive auf eine erste Steckerhälfte 100 gemäß einer ersten Ausführungsform. Die erste Steckerhälfte 100 weist ein kastenförmiges Gehäuse 110 auf, mit welchem die erste Steckerhälfte 100 an einem Fahrzeug, insbesondere an einem hier nicht weiter gezeigten Zugfahrzeug befestigt ist.

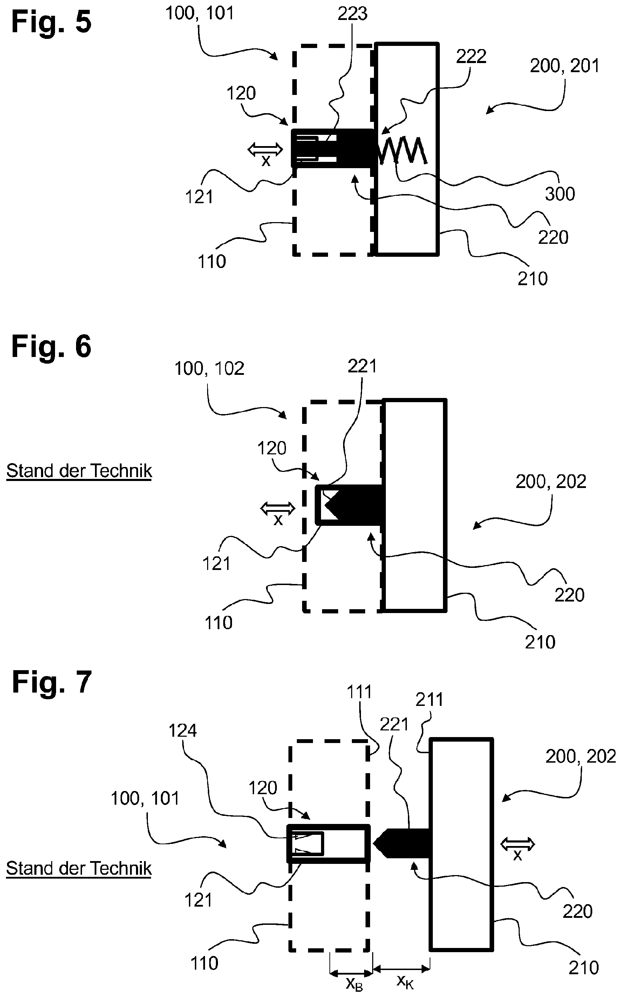

In einer Vorderwand 111 des ersten Gehäuses 110 sind eine Vielzahl von Kontaktelementen 120 in Form von Öffnungen in die Vorderwand 111 eingebracht, welche dahinterliegende Steckerbuchsen 121 aufnehmen. Die Vorderwand 111 des ersten Gehäuses 110 steht in kontaktiertem Zustand mit einer zweiten Steckerhälfte 200 einer entsprechenden Vorderwand 211 von dessen zweitem Gehäuses 210 gegenüber (siehe FIG. 7).

Die Steckerbuchsen 121 dienen dazu, von dem nicht gezeigten ersten Fahrzeug elektrische und pneumatische Energie auf ein daran angekuppeltes zweites Fahrzeug zu übertragen, wobei die elektrische Übertragung neben der eigentlichen Energieversorgung auch die Übertragung von elektrischen Steuersignalen umfasst. Entsprechend des vorgesehenen Verwendungszwecks weisen die Steckerbuchsen 121 voneinander abweichende Durchmesser, Einbautiefen und darin angeordnete Übertragungsmittel 224 zur elektrischen und/oder pneumatischen Kontaktierung der ersten und zweiten Steckerhälfte 100, 200 auf.

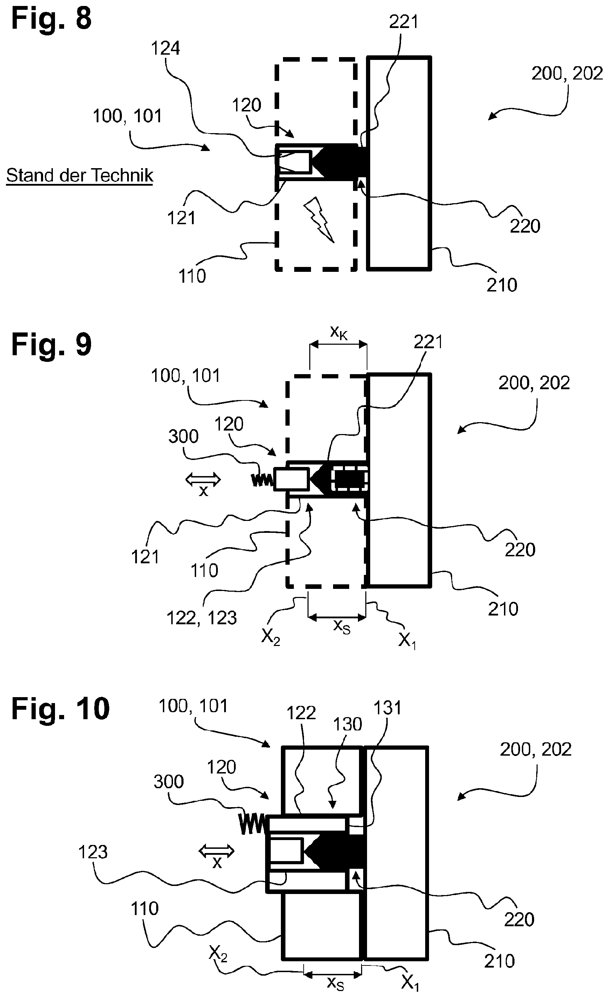

In der Darstellung der FIG. 1 ist beispielhaft die mittlere Steckerbuchse 121 als Steckersegment 122 gegenüber dem ersten Gehäuse 110 in einer Steckachse x beweglich gelagert. Das Steckersegment 122 ist aus der Steckerbuchse 123 gebildet. Anders als die übrigen Steckerbuchsen 121 des ersten Gehäuses 110 kann die Steckerbuchse 123 ausgehend von der Vorderwand 111 des ersten Gehäuses 110 nach hinten ausweichen, sofern ein inkompatibler Kontaktstift 221 beispielsweise einer zweiten Steckerhälfte 202 aus einer älteren Generation (siehe FIG. 9, FIG. 10) einer ersten Steckerhälfte 101 neuester Generation gemäß FIG. 1 angenähert wird und diesen kontaktiert.

Ein Federelement oder Aktuator 300 ist mit seinem ersten Ende an der Steckerbuchse 123 und mit seinem zweiten Ende an dem ersten Gehäuse 110 festgelegt, so dass die Steckerbuchse 123 ohne Vorhandensein der zweiten Steckerhälfte 200 in Richtung der Vorderwand 111 gedrückt wird und dort gehalten ist. Die Steckerbuchse 123 des Steckersegmentes 122 befindet sich in einer maximal vorgeschobenen Ausgangsstellung X₁ (siehe FIG. 9)

Bei Kontaktierung der ersten Steckerhälfte 100 mit dem Kontaktelement 220 einer kompatiblen zweiten Steckerhälfte 200, insbesondere einer zweiten Steckerhälfte 201 neuester Generation, stößt dessen Kontaktelement 220 in Form eines komplementär zu der Steckerbuchse 123 geformten, feststehenden Kontaktstiftes 221 in die Steckerbuchse 123 hinein, wodurch bei weiterer Annäherung in dessen Endlage eine Verbindung zwischen der ersten Steckerhälfte 100, 101 und der zweiten Steckerhälfte 200, 201 hergestellt ist.

Das Federelement oder der Aktuator 300 ist hinsichtlich seiner Federkraft oder Rückstellkraft derart konzipiert, dass bei einer Verbindung der ersten Steckerhälfte 100 mit einer kompatiblen zweiten Steckerhälfte 200 die Steckerbuchse 123 nicht in der Steckachse x ausweicht und eine Verbindung eines Kontaktstiftes 221 mit der in dem Steckersegment 122 angeordneten Steckerbuchse 123 erfolgt.

In der beweglich gelagerten Steckerbuchse 123 der ersten Steckerhälfte 100 sind Übertragungsmittel 124 derart zurückversetzt insbesondere in der Umfangswand der Steckerbuchse 123 angeordnet, dass diese bei einer Verbindung mit einer nicht kompatiblen, zweiten Steckerhälfte 200, insbesondere einer zweiten Steckerhälfte 202 einer älteren Generation, außerhalb einer Stoßzone liegen, in welcher durch die Annäherung des Kontaktstiftes 221 der zweiten Steckerhälfte 202 das oder die Übertragungsmittel 124 von diesem erfasst und zerstört werden.

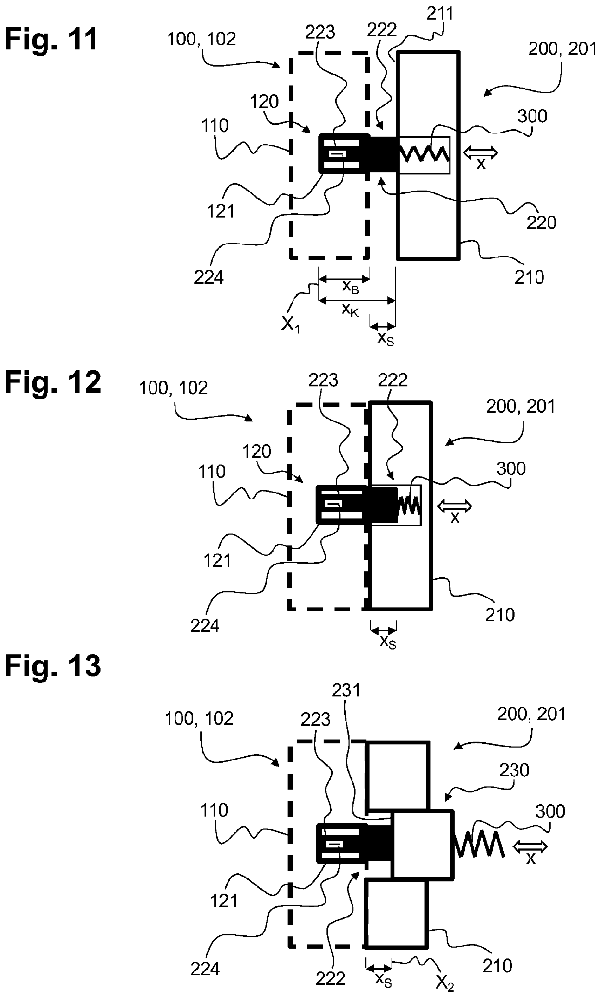

Alternativ zu einer in der Steckachse x beweglich gelagerten Steckerbuchse 123, ist es auch möglich, entsprechend FIG: 2 den an der zweiten Steckerhälfte 200 bezüglich der Vorderwand 211 weiter als die Kontaktstifte 221 vorstehenden Kontaktstift 223 als gegenüber dem zweiten Gehäuse 210 bewegliches Steckersegment 222 auszuführen. Die Vorderwand 211 ist die Wand des zweiten Gehäuses 210, welche der Vorderwand 111 des ersten Gehäuses 110 gegenübersteht. In diesem Fall wandert der Kontaktstift 223 der Steckersegments 222 bei Annäherung an eine inkompatible, erste Steckerhälfte 100 nach einer Kontaktierung innerhalb der zugehörigen Steckerbuchse 121 in der Steckachse x zurück. Ohne Kontaktierung mit einer inkompatiblen Steckerbuchse 121 ist der Kontaktstift 223 mittels des Federelementes oder Aktuators 300 in einer gegenüber der Vorderwand 211 maximal vorgeschobenen Ausgangsstellung X₁ gehalten (siehe FIG. 11). Das Federelement oder der Aktuator 300 greift mit einem Ende an dem Kontaktstift 223 des Steckersegments 222 und mit seinem anderen Ende an dem zweiten Gehäuse 210 an.

Auch bei dieser Ausführungsform ist die Federkraft oder Rückstellkraft des Federelementes oder Aktuators 300 so ausgelegt, dass eine betriebssichere Verbindung einer miteinander kompatiblen ersten und zweiten Steckerhälfte 100, 200 ohne ein rückwärtiges Auswandern der beweglich gelagerten Kontaktstiftes 223 des Steckersegmentes 222 möglich ist. Erst bei einer noch höheren Druckkraft, wie sie bei einem Zusammenfügen des Kontaktstiftes 223 des Steckersegmentes 222 mit einer Steckerbuchse 121 einer inkompatiblen, ersten Steckerhälfte 102 älterer Generation auftritt, lässt diese den beweglich gelagerten Kontaktstift 223 des Steckersegmentes 222 in der Steckachse x in das zweite Gehäuse 210 hineinwandern. Der gegenüber der Vorderwand 211 des zweiten Gehäuses 210 in Richtung der ersten Steckerhälfte 100 vorstehende Abschnitt des Kontaktstiftes 223 verkürzt sich entsprechend.

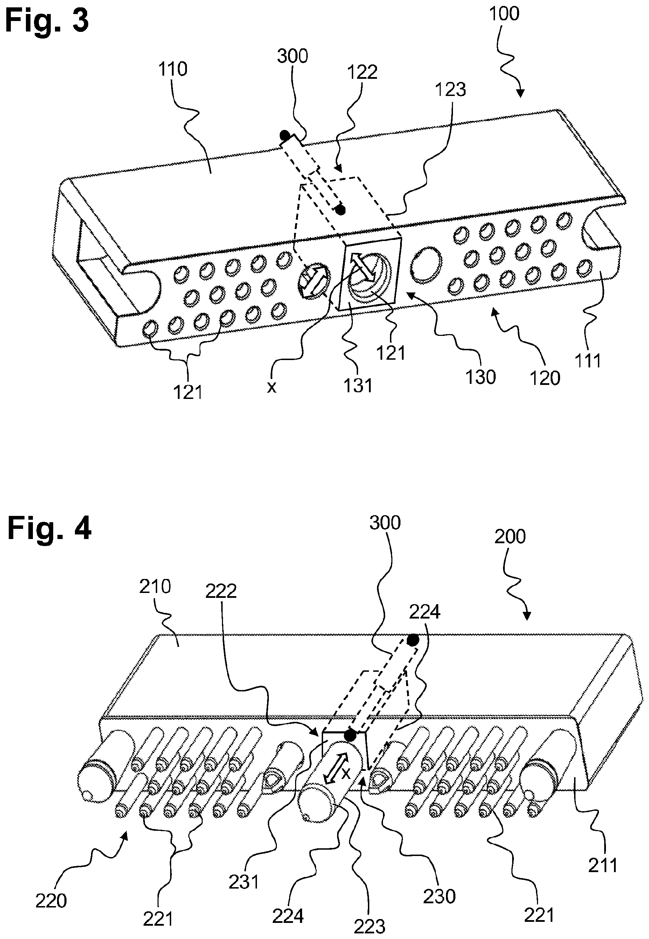

Die FIG. 3 stellt eine alternative Ausführungsform der ersten Steckerhälfte 100 dar, bei welcher anders als gemäß der Ausführungsform von FIG: 1, als verschiebbar gelagertes Steckersegment 122 in der Steckachse x nicht lediglich die Steckerbuchse 123 beweglich gelagert ist, sondern zusammen mit der Steckerbuchse 123 zusätzlich ein Abschnitt 130 des ersten Gehäuses 110. Zu diesem Abschnitt 130 des ersten Gehäuses 110 gehört auch ein Teil 131 der Vorderwand 111 des ersten Gehäuses 110.

Der in der Steckachse x gegenüber dem ersten Gehäuse 110 beweglich gelagerte Abschnitt 130 ist mittels des Federelementes oder Aktuators 300 in einer bezüglich des feststehenden, ersten Gehäuses 110 vorgeschobenen Position gehalten. Hierfür greift das Federelement oder der Aktuator 300 mit einem Ende an dem Abschnitt 130 und mit dem anderen Ende an dem feststehenden, ersten Gehäuse 110 an. Bei Kontaktierung der ersten Steckerhälfte 100 mit einer inkompatiblen, zweiten Steckerhälfte 200 schiebt dessen Kontaktstift 221 das aus Abschnitt 130 und Steckerbuchse 123 gebildete Steckersegment 122 in der Steckachse x in das erste Gehäuse 110 hinein und hält dadurch Beschädigungen von der Steckerbuchse 121 und dem Kontaktstift 223 fern.

FIG. 4 zeigt eine weitere, alternative Ausführungsform, bei welcher das Steckersegment 222 des zweiten Gehäuses 210 nicht nur einen Kontaktstift 223, sondern auch einen Abschnitt 230 des zweiten Gehäuses 210 umfasst, an welchem der Kontaktstift 223 befestigt ist. Zu dem Abschnitt 230 des zweiten Gehäuses 210 gehört auch ein Teil 231 der Vorderwand 211. Das Federelement oder der Aktuator 300 befinden sich ohne das Vorhandensein einer zweiten Steckerhälfte 200 in einer ausgeschobenen Funktionsstellung, in welcher der Teil 231 mit der restlichen Vorderwand 211 fluchtet.

Die weiteren FIG. 5 bis FIG. 13 zeigen unterschiedliche Szenarien, bei denen erste und zweite Steckerhälften 100, 200 derselben und unterschiedlicher Genrationen aufeinandertreffen. Exemplarisch ist aus Veranschaulichungsgründen lediglich ein Kontaktelement 120 des ersten Gehäuses 110 und ein Kontaktelement 220 des zweiten Gehäuses 210 dargestellt, auch wenn in der Praxis stets mehrere Kontaktelemente 120, 220 entsprechend FIG. 1 bis FIG. 4 vorhanden sind.

Die FIG. 5 stellt ein Zusammentreffen von einer ersten Steckerhälfte 100 in Form einer Steckerhälfte 101 der neuesten Generation mit einer zweiten Steckerhälfte 200 in Form einer zweiten Steckerhälfte 201 der ebenfalls neuesten Generation dar. Die erste und zweite Steckerhälfte 101, 201 schieben sich während der Annäherung ineinander und stellen dadurch einen Kontakt her. Die erste und zweite Steckerhälfte 101, 201 stellen den vollständigen Funktionsumfang zur Verfügung.

Die zweite Steckerhälfte 201 weist ein in der Steckachse x beweglich gelagertes Steckersegment 222 auf, dessen zugehöriger Kontaktstift 223 von dem Federelement oder Aktuator 300 in einer ausgefahrenen Position in Richtung der ersten Steckerhälfte 101 geschoben ist. Das beweglich gelagerte Steckersegment 222 wäre bei dieser Kombination der zweiten Steckerhälfte 201 der neuesten Generation mit einer ersten Steckerhälfte 101 der ebenfalls neuesten Generation überflüssig.

Die FIG. 6 verdeutlicht eine Situation, bei welcher eine erste Steckerhälfte 100 in Form einer ersten Steckerhälfte 102 einer älteren Generation auf eine zweite Steckerhälfte 200 in Form einer zweiten Steckerhälfte 202 einer ebenfalls älteren Generation trifft. Die erste und zweite Steckerhälften 102, 202 entsprechend dem Stand der Technik und bieten den bisherigen, eingeschränkten Funktionsumfang der bekannten Steckervorrichtungen. Naturgemäß weist weder die erste Steckerhälfte 100 noch die zweite Steckerhälfte 200 ein Kontaktelement 120, 220 auf, welches in dem gegenüber dem ersten oder zweiten Gehäuse 110, 210 in der Steckachse x beweglich gelagerten Steckersegment 122, 222 angebracht ist.

Probleme können jedoch bei einer Mischung der ersten und zweiten Steckerhälfte 101, 102, 201, 202 des Standes der Technik aus unterschiedlichen Generationen entstehen. Einen solchen Fall greift die FIG. 7 auf.

Gemäß der Darstellung in FIG. 7 nähert sich eine erste Steckerhälfte 100 in Form einer Steckerhälfte 101 der neuesten Generation einer zweiten Steckerhälfte 200 in Form einer Steckerhälfte 202 einer älteren Generation an, steht jedoch noch nicht mit dieser in Wirkkontakt. Weder die erste noch die zweite Steckerhälfte 101, 202 verfügt über ein beweglich in der Steckachse x gelagertes Steckersegment 122, 222. Der Kontaktstift 221 der zweiten Steckerhälfte 202 ist mit einer größeren axialen Länge x_{K} ausgebildet als die axiale Länge x_{B} der Steckerbuchse 121 der ersten Steckerhälfte 101, so dass bei einer weiteren Annäherung der ersten Steckerhälfte 101 an die zweite Steckerhälfte 202 diese entsprechend der Situation in FIG. 8 miteinander kollidieren und dadurch beschädigt werden.

Eine zerstörerische Kollision der Steckerbuchse 121 der ersten Steckerhälfte 101 mit dem Kontaktstift 221 der zweiten Steckerhälfte 202 wird vermieden, in dem entsprechend des Ausführungsbeispiels in FIG. 9 an dem ersten Gehäuse 101 ein Steckersegment 122 vorgesehen ist, welches ein Ausweichen von dessen Steckerbuchse 123 in der Steckachse x zulässt. Vor der Kontaktierung mit dem Kontaktstift 221 befindet sich die mit unterbrochener Linie gezeigte Steckerbuchse 123 in der vorgeschobenen Ausgangsstellung X₁. Nach der Kontaktierung mit dem Kontaktstift 221 hat dieser die Steckerbuchse 123 des Steckersegments 122 in eine zurückgeschobene Ausweichposition X₂ verbracht. Die Steckerbuchse 123 hat als Steckersegment 122 somit einen Verfahrweg x_{S} zurückgelegt. Das Federelement oder der Aktuator 300 befindet sich in einer reversibel zusammengedrückten Position.

In der zurückgeschobenen Ausweichposition X₂ findet weiterhin keine funktionale Verbindung der Steckerbuchse 123 des Steckersegments 122 mit dem Kontaktstift 221 der zweiten Steckerhälfte 202 statt; diese wäre aber aufgrund des technisch eingeschränkten Funktionsumfangs der zweiten Steckerhälfte 202 der älteren Generation ohnehin nicht möglich.

Die FIG. 10 zeigt ein alternatives Ausführungsbeispiel einer ersten Steckerhälfte 101 der neuesten Generation mit einem in der Steckachse x verschieblichen Steckersegment 122, bei dem zusammen mit der Steckerbuchse 123 auch ein Abschnitt 130 des ersten Gehäuses 110 beweglich gelagert und von dem teilweise in die Steckerbuchse 123 eingedrungenen Kontaktstift 221 um den Verfahrweg x_{S} in die zurückgeschobene Position X₂ gedrückt worden ist. Der Teil 131 des Abschnitts 130 des Gehäuses 110 ist ebenfalls stufenartig gegenüber der Vorderwand 111 zurückgesetzt.

Die FIG. 11 zeigt den umgekehrten Fall mit einer ersten Steckerhälfte 100 in Form einer ersten Steckerhälfte 102 gemäß einer älteren Generation, die auf eine zweite Steckerhälfte 200 in Form einer zweiten Steckerhälfte 201 gemäß neuester Generation trifft. Bei diesem Ausführungsbeispiel weist die zweite Steckerhälfte 201 ein in der Steckachse x beweglich gelagertes Steckersegment 222 auf. Das Steckersegment 222 ist hier ausschließlich aus dem Kontaktstift 223 gebildet.

Der Kontaktstift 223 ragt mit einer axialen Länge x_{K} aus dem zweiten Gehäuse 210 heraus und kontaktiert bereits mit seinem distalen Ende die Steckerbuchse 121, welche eine kürze axiale Länge x_{B} besitzt. An dem distalen Ende des Kontaktstiftes 223 sind ein oder mehrere Übertragungsmittel 224 in axialer Richtung zurückversetzt angeordnet und dadurch vor einer Zerstörung durch Kontaktierung mit der Steckerbuchse 121 geschützt. Das zweite Gehäuse 210 der zweiten Steckerhälfte 201 ist in der Steckachse x noch beabstandet zu dem ersten Gehäuse 110 der ersten Steckerhälfte 102 ausgerichtet.

Bei weiterer Annäherung der ersten und zweiten Steckerhälfte 102, 201 gemäß der in FIG. 12 gezeigten Situation, wandert der Kontaktstift 223 des Steckersegmentes 222 gegen den Vorschub des Federelementes oder Aktuators 300 um das Maß des Verfahrwegs x_{S} weiter in das zweite Gehäuse 210 hinein, bis die erste und zweite Steckerhälfte 102, 201 ihre Endlage erreicht haben und etwaige hier nicht sichtbare weitere Kontaktelemente 120, 220 funktional verbunden sind.

Die FIG. 13 veranschaulicht anhand eines weiteren Ausführungsbeispiels ein Steckersegment 222, welches zusätzlich zu dem Kontaktstift 223 auch einen Abschnitt 230 des zweiten Gehäuses 210 umfasst, der ebenfalls nach einer Kontaktierung des Kontaktstiftes 223 gegen den Druck des Federelementes oder Aktuators 300 in das Gehäuses 210 hineingeschoben ist. Zu diesem Abschnitt 230 gehört auch ein Teil 231 der Vorderwand 211.

### BEZUGSZEICHENLISTE

- 100: erste Steckerhälfte
- 101: erste Steckerhälfte neueste Generation
- 102: erste Steckerhälfte ältere Generation

- 110: erstes Gehäuse
- 111: Vorderwand erstes Gehäuse

- 120: Kontaktelemente erstes Gehäuse
- 121: Steckerbuchsen
- 122: Steckersegment erstes Gehäuse
- 123: Steckerbuchse Steckersegment
- 124: Übertragungsmittel Steckerbuchse

- 130: Abschnitt erstes Gehäuse
- 131: Teil Vorderwand erstes Gehäuse

- 200: zweite Steckerhälfte
- 201: zweite Steckerhälfte neueste Generation
- 202: zweite Steckerhälfte ältere Generation

- 210: zweites Gehäuse
- 211: Vorderwand zweites Gehäuse

- 220: Kontaktelemente zweites Gehäuse
- 221: Kontaktstifte
- 222: Steckersegment zweites Gehäuse
- 223: Kontaktstift Steckersegment
- 224: Übertragungsmittel Kontaktstift
- 230: Abschnitt zweites Gehäuse
- 231: Teil Vorderwand zweites Gehäuse

- 300: Federelement/Aktuator

- x: Steckachse
- X₁: vorgeschobene Ausgangsstellung Steckersegment
- X₂: zurückgeschobene Ausweichposition Steckersegment
- x_{B}: Länge Buchse
- x_{K}: Länge Kontaktstift
- x_{S}: Verfahrweg Steckersegment

## Patentansprüche

1. Steckervorrichtung für ein Steckkupplungssystem zwischen einem ersten Fahrzeug und einem zweiten Fahrzeug, wobei die Steckervorrichtung eine dem ersten Fahrzeug zugeordnete, erste Steckerhälfte (100) mit einem ersten Gehäuse (110) und mehreren, in dem ersten Gehäuse (110) angeordneten Kontaktelementen (120) sowie eine dem zweiten Fahrzeug zugeordnete, zweite Steckerhälfte (200) mit einem zweiten Gehäuse (210) und mehreren, in dem zweiten Gehäuse (210) angeordneten Kontaktelementen (220) aufweist, wobei die Kontaktelemente (220) seitens der ersten Steckerhälfte (100) Steckerbuchsen (121) und seitens der zweiten Steckerhälfte (200) Kontaktstifte (221) sind, welche bei einer Annäherung der ersten und zweiten Steckerhälfte (100, 200) in Steckachse (x) die Steckerbuchsen (121) kontaktieren, wobei mindestens ein Kontaktelement (120, 220) in einem bezüglich des zugehörigen ersten oder zweiten Gehäuses (110, 210) in der Steckachse (x) beweglich gelagerten Steckersegment (122, 222) angebracht ist,
**dadurch gekennzeichnet,**
**dass** das Steckersegment (122, 222) derart beschaffen ist, dass im Falle einer Kollision der ersten oder zweiten Steckerhälfte (100, 200) mit Bauteilen einer anderen, geometrisch inkompatiblen zweiten oder ersten Steckerhälfte (200, 100) das Steckersegment (122, 222) in der Steckachse (x), entgegen der Steckrichtung ausweichbar angeordnet ist und einen Bauraum freigibt, in welchen ein Abschnitt der anderen, inkompatiblen zweiten oder ersten Steckerhälfte (200, 100) eintauchbar ist, wobei das Steckersegment (122, 222) reversibel in einer zurückgeschobenen Ausweichposition (X₂) ohne eine Verbindung der Kontaktelemente (120, 220) ausgerichtet ist.

2. Steckervorrichtung nach Anspruch 1, **dadurch gekennzeichnet, dass** das Steckersegment (122, 222) bezüglich des zugehörigen ersten oder zweiten Gehäuses (110, 210) linear geführt ist.

3. Steckervorrichtung nach Anspruch 1 oder 2, **dadurch gekennzeichnet, dass** das Steckersegment (122, 222) ein Abschnitt (130, 230) des ersten oder zweiten Gehäuses (110, 210) ist.

4. Steckervorrichtung nach Anspruch 3, **dadurch gekennzeichnet, dass** der Abschnitt (130, 230) des ersten oder zweiten Gehäuses (110, 210) aus einem Teil (131, 231) der dem anderen zweiten oder ersten Gehäuse (210, 110) zugewandten Vorderwand (131, 231) gebildet ist.

5. Steckervorrichtung nach Anspruch 3 oder 4, **dadurch gekennzeichnet, dass** das Kontaktelement (120, 220) ortsfest zu dem Abschnitt (130, 230) des zugehörigen ersten oder zweiten Gehäuses (110, 210) angeordnet ist.

6. Steckervorrichtung nach einem der Ansprüche 3 bis 5, **dadurch gekennzeichnet, dass** an dem Abschnitt (130) des zugehörigen ersten Gehäuses (110) eine (123) der mehreren Steckerbuchsen (121) befestigt ist.

7. Steckervorrichtung nach Anspruch 1 oder 2, **dadurch gekennzeichnet, dass** das Steckersegment (122) eine (123) der mehreren Steckerbuchsen (121) ist.

8. Steckervorrichtung nach Anspruch 6 oder 7, **dadurch gekennzeichnet, dass** die eine Steckerbuchse (123) des Steckersegments (122) derart angeordnet ist, dass sie dem in Steckachse (x) am weitesten vorstehenden Kontaktstift (221) gegenübersteht.

9. Steckervorrichtung nach einem der Ansprüche 3 bis 5, **dadurch gekennzeichnet, dass** an dem Abschnitt (230) des zugehörigen zweiten Gehäuses (210) einer (223) der mehreren Kontaktstifte (221) befestigt ist.

10. Steckervorrichtung nach Anspruch 1 oder 2, **dadurch gekennzeichnet, dass** das Steckersegment (222) einer (223) der mehreren Kontaktstifte (221) ist.

11. Steckervorrichtung nach Anspruch 9 oder 10, **dadurch gekennzeichnet, dass** der eine Kontaktstift (223) des Steckersegments (222) in Steckachse (x) derart dimensioniert ist, dass dieser gegenüber der zweiten Steckerhälfte (200) am weitesten vorsteht.

12. Steckervorrichtung nach einem der Ansprüche 1 bis 11, **dadurch gekennzeichnet, dass** das Steckersegment (122, 222) mittels eines Federelementes oder Aktuators (300) in einer vorgeschobenen Ausgangsstellung (X₁) gehalten ist.

13. Steckervorrichtung nach Anspruch 12, **dadurch gekennzeichnet, dass** das Federelement oder der Aktuator (300) eine derartige Vorspannkraft auf das Steckersegment (122, 222) überträgt, die größer ist als ein Steckwiderstand eines kompatiblen Kontaktelementes (120, 220) der anderen ersten oder zweiten Steckerhälfte (100, 200).

14. Steckervorrichtung nach einem der Ansprüche 1 bis 13, **dadurch gekennzeichnet, dass** das Steckersegment (122) in der ersten Steckerhälfte (100) angeordnet und bei Kontakt mit einer inkompatiblen, zweiten Steckerhälfte (200) durch diese in eine zurückgeschobene Ausweichposition (X₂) gedrückt ist.

15. Steckervorrichtung nach einem der Ansprüche 1 bis 13, **dadurch gekennzeichnet, dass** das Steckersegment (222) in der zweiten Steckerhälfte (200) angeordnet und bei Kontakt mit einer inkompatiblen, ersten Steckerhälfte (100) durch diese in eine zurückgeschobene Ausweichposition (X₂) gedrückt ist.

16. Steckervorrichtung nach einem der Ansprüche 1 bis 15, **dadurch gekennzeichnet, dass** das Steckersegment (122) der ersten Steckerhälfte (100) einen Verfahrweg (x_{S}) zwischen einer vorgeschobenen Ausgangsstellung (X₁) und einer zurückgeschobenen Ausweichposition (X₂) aufweist, der mindestens einer Differenz aus einer Länge (x_{K}) des zugehörigen, aus dem zweiten Gehäuse (210) vorstehenden Kontaktstiftes (221) der zweiten Steckerhälfte (200) und einer Länge (x_{B}) der zugehörigen, in das erste Gehäuse (110) hineinragenden Steckerbuchse (123) des Steckersegments (122) der ersten Steckerhälfte (100) in ihrer vorgeschobenen Ausgangsstellung (X₂) entspricht.

17. Steckervorrichtung nach einem der Ansprüche 1 bis 16, **dadurch gekennzeichnet, dass** das Steckersegment (222) der zweiten Steckerhälfte (200) einen Verfahrweg (x_{S}) zwischen einer vorgeschobenen Ausgangsstellung (X₁) und einer zurückgeschobenen Ausweichposition (X₂) aufweist, der mindestens einer Differenz aus Länge (x_{B}) der zugehörigen, in das erste Gehäuse (110) hineinragenden Steckerbuchse (121) der ersten Steckerhälfte (100) und einer Länge (x_{K}) des zugehörigen, aus dem zweiten Gehäuse (201) vorstehenden Kontaktstiftes (223) des Steckersegments (222) der zweiten Steckerhälfte (200) in seiner vorgeschobenen Ausgangsstellung (X₁) entspricht.

18. Steckervorrichtung nach einem der Ansprüche 1 bis 17, **dadurch gekennzeichnet, dass** die Steckerbuchse (123) oder der Kontaktstift (223) des Steckersegmentes (122, 222) Übertragungsmittel (124, 224) aufweisen, die in und quer zur Steckachse (x) außerhalb einer Stoßzone mit den Kontaktelementen (220, 120) des anderen, zweiten oder ersten Gehäuses (210, 110) angeordnet sind.

## Claims

1. A plug device for a plug-type coupling system between a first vehicle and a second vehicle, wherein the plug device has a first plug half (100) which is paired with the first vehicle and which comprises a first housing (110) and a plurality of contact elements (120) arranged in the first housing (110), and a second plug half (200) which is paired with the second vehicle and which comprises a second housing (210) and a plurality of contact elements (220) arranged in the second housing (210), wherein the contact elements (220) on the first plug half (100) are plug sockets (121) and the contact elements (220) of the second plug half (200) are contact pins (221) which contact the plug sockets (121) when the first and second plug halves (100, 200) are brought together in a plug-in axis (x), wherein at least one contact element (120, 220) is fitted in a plug element (122, 222) which is movably mounted in the plug-in axis (x) with respect to the corresponding first or second housing (110, 210),
**characterized in that**
the plug element (122, 222) is provided in such a way that, in the case of a collision of the first or second plug half (100, 200) with components of another, geometrically incompatible second or first plug half (200, 100), the plug element (122, 222) is arranged such that it can yield in the plug-in axis (x) counter to the plug-in direction and releases an assembly space, into which a portion of the other, incompatible second or first plug half (200, 100) can enter, wherein the plug element (122, 222) is oriented reversibly in a pushed-back yielding position (X₂) without a connection of the contact elements (120, 220).

2. The plug device according to claim 1, **characterized in that** the plug element (122, 222) is guided linearly with respect to the associated first or second housing (110, 210).

3. The plug device according to claim 1 or 2, **characterized in that** the plug element (122, 222) is a section (130, 230) of the first or second housing (110, 210).

4. The plug device according to claim 3, **characterized in that** the section (130, 230) of the first or second housing (110, 210) is formed from a part (131, 231) of the front wall (131, 231) facing the other second or first housing (210, 110).

5. The plug device according to claim 3 or 4, **characterized in that** the contact element (120, 220) is arranged in a fixed position relative to the section (130, 230) of the associated first or second housing (110, 210).

6. The plug device according to one of claims 3 to 5, **characterized in that** one plug socket (123) of the plurality of plug sockets (121) is fastened to the section (130) of the associated first housing (110).

7. The plug device according to claim 1 or 2, **characterized in that** the plug element (122) is one plug socket (123) of the plurality of plug sockets (121).

8. The plug device according to claim 6 or 7, **characterized in that** the one plug socket (123) of the plug element (122) is arranged such that it is opposite the contact pin (221) that protrudes furthest in the plug-in axis (x).

9. The plug device according to one of claims 3 to 5, **characterized in that** one contact pin (223) of the plurality of contact pins (221) is fastened to the section (230) of the associated second housing (210).

10. The plug device according to claim 1 or 2, **characterized in that** the plug element (222) is one contact pin (223) of the plurality of contact pins (221).

11. The plug device according to claim 9 or 10, **characterized in that** the one contact pin (223) of the plug segment (222) is dimensioned in the plug-in axis (x) such that it protrudes the furthest from the second plug half (200).

12. The plug device according to one of claims 1 to 11, **characterized in that** the plug element (122, 222) is held in an extended initial position (X₁) by means of a spring element or actuator (300).

13. The plug device according to claim 12, **characterized in that** the spring element or actuator (300) transmits a preload force to the plug element (122, 222) that is greater than a plug resistance of a compatible contact element (120, 220) of the other first or second plug half (100, 200).

14. The plug device according to one of claims 1 to 13, **characterized in that** the plug element (122) is arranged in the first plug half (100) and is pressed into a pushed-back yielding position (X₂) by an incompatible second plug half (200) upon contact with the latter.

15. The plug device according to one of claims 1 to 13, **characterized in that** the plug element (222) is arranged in the second plug half (200) and is pressed into a pushed-back yielding position (X₂) by an incompatible first plug half (100) upon contact with the latter.

16. The plug device according to one of claims 1 to 15, **characterized in that** the plug element (122) of the first plug half (100) has a travel path (x_{S}) between an extended initial position (X₁) and a pushed-back yielding position (X₂) which corresponds to at least a difference between a length (x_{K}) of the associated contact pin (221) of the second plug half (200) protruding from the second housing (210) and a length (x_{B}) of the associated plug socket (123) of the plug element (122) of the first plug half (100) protruding into the first housing (110) in its extended initial position (X₂).

17. The plug device according to one of claims 1 to 16, **characterized in that** the plug element (222) of the second plug half (200) has a travel path (x_{S}) between an extended initial position (X₁) and a pushed-back yielding position (X₂) which corresponds to at least a difference between the length (x_{B}) of the associated plug socket (121) of the first plug half (100) projecting into the first housing (110) and a length (x_{K}) of the associated contact pin (223) of the plug element (222) of the second plug half (200) projecting from the second housing (201) in its extended initial position (X₁).

18. The plug device according to one of claims 1 to 17, **characterized in that** the plug socket (123) or the contact pin (223) of the plug element (122, 222) have transmission means (124, 224) which are arranged in and transversely to the plug-in axis (x) outside a joint zone with the contact elements (220, 120) of the other, second or first housing (210, 110).

## Revendications

1. Dispositif d'enfichage pour un système de couplage de type enfichable entre un premier véhicule et un second véhicule, dans lequel le dispositif d'enfichage présente une première moitié de connecteur (100), associée au premier véhicule, comportant un premier boîtier (110) et plusieurs éléments de contact (120) disposés dans le premier boîtier (110), ainsi qu'une seconde moitié de connecteur (200), associée au second véhicule, comportant un second boîtier (210) et plusieurs éléments de contact (220) disposés dans le second boîtier (210), dans lequel les éléments de contact (220) sont, du côté de la première moitié de connecteur (100), des douilles de connecteur (121) et, du côté de la seconde moitié de connecteur (200), des broches de contact (221), lesquelles, lors d'un rapprochement de la première et de la seconde moitié de connecteur (100, 200) selon un axe d'enfichage (x), entrent en contact avec les douilles de connecteur (121), dans lequel au moins un élément de contact (120, 220) est monté dans un segment de connecteur (122, 222) supporté de manière mobile, selon l'axe d'enfichage (x), par rapport au premier ou au second boîtier correspondant (110, 210),
**caractérisé en ce que,**
le segment de connecteur (122, 222) est configuré de telle sorte que, en cas de collision de la première ou de la seconde moitié de connecteur (100, 200) avec des composants d'une autre seconde ou première moitié de connecteur (200, 100) géométriquement incompatible, le segment de connecteur (122, 222) est disposé de manière à pouvoir s'escamoter selon l'axe d'enfichage (x), à l'encontre du sens d'enfichage, et à libérer un volume d'encombrement dans lequel une section de l'autre seconde ou première moitié de connecteur (200, 100) incompatible peut pénétrer, dans lequel le segment de connecteur (122, 222) est agencé de manière réversible dans une position d'escamotage repoussée (X₂) sans établissement d'une connexion des éléments de contact (120, 220).

2. Dispositif d'enfichage selon la revendication 1, **caractérisé en ce que** le segment de connecteur (122, 222) est guidé linéairement par rapport au premier ou au second boîtier correspondant (110, 210).

3. Dispositif d'enfichage selon la revendication 1 ou 2, **caractérisé en ce que** le segment de connecteur (122, 222) est une section (130, 230) du premier ou du second boîtier (110, 210).

4. Dispositif d'enfichage selon la revendication 3, **caractérisé en ce que** la section (130, 230) du premier ou du second boîtier (110, 210) est formée à partir d'une partie (131, 231) de la paroi avant (131, 231) tournée vers l'autre second ou premier boîtier (210, 110).

5. Dispositif d'enfichage selon la revendication 3 ou 4, **caractérisé en ce que** l'élément de contact (120, 220) est disposé de manière fixe par rapport à la section (130, 230) du premier ou du second boîtier correspondant (110, 210).

6. Dispositif d'enfichage selon l'une quelconque des revendications 3 à 5, **caractérisé en ce que** l'une (123) des multiples douilles de connecteur (121) est fixée sur la section (130) du premier boîtier correspondant (110).

7. Dispositif d'enfichage selon la revendication 1 ou 2, **caractérisé en ce que** le segment de connecteur (122) est l'une (123) des multiples douilles de connecteur (121).

8. Dispositif d'enfichage selon la revendication 6 ou 7, **caractérisé en ce que** l'une douille de connecteur (123) du segment de connecteur (122) est disposée de telle manière qu'elle fait face à la broche de contact (221) faisant saillie le plus loin selon l'axe d'enfichage (x).

9. Dispositif d'enfichage selon l'une quelconque des revendications 3 à 5, **caractérisé en ce qu'**une (223) des multiples broches de contact (221) est fixée sur la section (230) du second boîtier correspondant (210).

10. Dispositif d'enfichage selon la revendication 1 ou 2, **caractérisé en ce que** le segment de connecteur (222) est l'une (223) des multiples broches de contact (221).

11. Dispositif d'enfichage selon la revendication 9 ou 10, **caractérisé en ce que** l'une broche de contact (223) du segment de connecteur (222) est dimensionnée selon l'axe d'enfichage (x) de telle manière qu'elle fait saillie le plus par rapport à la seconde moitié de connecteur (200).

12. Dispositif d'enfichage selon l'une quelconque des revendications 1 à 11, **caractérisé en ce que** le segment de connecteur (122, 222) est maintenu dans une position de départ avancée (X₁) au moyen d'un élément ressort ou d'un actionneur (300).

13. Dispositif d'enfichage selon la revendication 12, **caractérisé en ce que** l'élément ressort ou l'actionneur (300) transmet au segment de connecteur (122, 222) une force de précontrainte telle qu'elle est supérieure à la résistance à l'enfichage d'un élément de contact compatible (120, 220) de l'autre première ou seconde moitié de connecteur (100, 200).

14. Dispositif d'enfichage selon l'une quelconque des revendications 1 à 13, **caractérisé en ce que** le segment de connecteur (122) est disposé dans la première moitié de connecteur (100) et, lors d'un contact avec une seconde moitié de connecteur (200) incompatible, est repoussé par celle-ci dans une position d'escamotage repoussée (X₂).

15. Dispositif d'enfichage selon l'une quelconque des revendications 1 à 13, **caractérisé en ce que** le segment de connecteur (222) est disposé dans la seconde moitié de connecteur (200) et, lors d'un contact avec une première moitié de connecteur (100) incompatible, est repoussé par celle-ci dans une position d'escamotage repoussée (X₂).

16. Dispositif d'enfichage selon l'une quelconque des revendications 1 à 15, **caractérisé en ce que** le segment de connecteur (122) de la première moitié de connecteur (100) présente une course (x_{S}) entre une position de départ avancée (X₁) et une position d'escamotage repoussée (X₂), laquelle correspond au moins à une différence entre une longueur (x_{K}) de la broche de contact (221) correspondante, faisant saillie à partir du second boîtier (210) de la seconde moitié de connecteur (200), et une longueur (x_{B}) de la douille de connecteur (123) correspondante, en saillie dans le premier boîtier (110), du segment de connecteur (122) de la première moitié de connecteur (100) dans sa position de départ avancée (X₂).

17. Dispositif d'enfichage selon l'une quelconque des revendications 1 à 16, **caractérisé en ce que** le segment de connecteur (222) de la seconde moitié de connecteur (200) présente une course (x_{S}) entre une position de départ avancée (X₁) et une position d'escamotage repoussée (X₂), laquelle correspond au moins à une différence entre une longueur (x_{B}) de la douille de connecteur (121) correspondante, en saillie dans le premier boîtier (110) de la première moitié de connecteur (100), et une longueur (x_{K}) de la broche de contact (223) correspondante, faisant saillie à partir du second boîtier (201), du segment de connecteur (222) de la seconde moitié de connecteur (200) dans sa position de départ avancée (X₁).

18. Dispositif d'enfichage selon l'une quelconque des revendications 1 à 17, **caractérisé en ce que** la douille de connecteur (123) ou la broche de contact (223) du segment de connecteur (122, 222) présente des moyens de transmission (124, 224) disposés dans et transversalement à l'axe d'enfichage (x) en dehors d'une zone de collision avec les éléments de contact (220, 120) de l'autre second ou premier boîtier (210, 110).
